# FASCICULE DE BREVET EUROPEEN

(11) **EP 4 157 655 B1**
(45) Date de publication et mention de la délivrance du brevet: **04.09.2024**
(21) Numéro de dépôt: 21726687.3
(22) Date de dépôt: 26.05.2021
(51) Int. Cl.: B60H 1/00, B60H 1/32, F25B 41/39, F25B 5/02, F25B 49/02, F25B 5/04, F25B 6/04, F25B 40/02, F25B 40/00

(54) **PROCEDE DE CONTROLE D'UN SYSTEME DE CONDITIONNEMENT THERMIQUE POUR VEHICULE AUTOMOBILE**
VERFAHREN ZUR STEUERUNG EINER THERMISCHEN KLIMAANLAGE FÜR EIN KRAFTFAHRZEUG
METHOD FOR CONTROLLING A THERMAL CONDITIONING SYSTEM FOR A MOTOR VEHICLE

(30) Priorité: 27.05.2020 FR 2005607
(43) Date de publication de la demande: 05.04.2023
(73) Titulaire: VALEO SYSTEMES THERMIQUES, 78320 Le Mesnil Saint-Denis (FR)
(72) Inventeur: NICOLAS, Bertrand, 78322 Le Mesnil-Saint-Denis Cedex (FR); YAHIA, Mohamed, 78322 Le Mesnil-Saint-Denis Cedex (FR); PORTO, Muriel, 78322 Le Mesnil-Saint-Denis Cedex (FR)
(74) Mandataire: Valeo Systèmes Thermiques
(86) Numéro de dépôt international: PCT/EP2021/063958
(87) Numéro de publication internationale: WO 2021/239762

(56) Documents cités:
- CN-A- 110 398 043
- FR-A1- 3 077 377
- US-A1- 2014 326 010

## Description

La présente invention se rapporte au domaine des systèmes de conditionnement thermique pour véhicule automobile. De tels systèmes permettent par exemple une régulation thermique de différents organes du véhicule, tel l'habitacle ou une batterie de stockage d'énergie électrique, dans le cas d'un véhicule à propulsion électrique. Les échanges de chaleur permettant la régulation thermique sont obtenus principalement par la compression et la détente d'un fluide réfrigérant aux bornes de plusieurs échangeurs de chaleur agencés le long d'un circuit fermé.

Lorsque deux évaporateurs distincts sont disposés en parallèle, et que l'on veut que les deux évaporateurs fonctionnent avec des températures d'évaporation différentes, il est connu, comme par exemple du document CN 110 398 043 A, de disposer une vanne de régulation de pression en aval de l'un des évaporateurs. La perte de charge crée par la vanne de régulation de pression permet d'obtenir une pression différente entre les deux évaporateurs, et donc une température différente.

Généralement, l'évaporateur réalisant le refroidissement des batteries électriques du véhicule génère une température plus élevée que celle de l'évaporateur réalisant le refroidissement du flux d'air à destination de l'habitacle. Ainsi, la vanne de régulation de pression est placée en aval de l'évaporateur réalisant le refroidissement batterie. Lorsque la batterie possède une faible conductance thermique, il est difficile de fournir une puissance de refroidissement suffisante et il peut être intéressant de pouvoir assurer une température d'évaporation plus froide dans l'évaporateur batterie que dans l'évaporateur habitacle. Par ailleurs, une difficulté d'utilisation d'un tel système est de gérer les phases de fonctionnement pendant lesquelles les besoins en refroidissement cumulés de l'habitacle et de la batterie sont supérieurs à la capacité maximale de refroidissement du système. Dans ce cas, la répartition de la puissance de refroidissement pourra donner la priorité à l'un des deux évaporateurs, afin de satisfaire le besoin de refroidissement du composant jugé prioritaire. Suivant les conditions et les modes de fonctionnement, la priorité peut être donnée soit au refroidissement de l'habitacle, soit au refroidissement de la batterie. Dans chacun de ces cas, l'évaporateur défini comme prioritaire va recevoir la puissance frigorifique qui lui est nécessaire pour assurer la régulation thermique, tandis que l'évaporateur défini comme non prioritaire va recevoir seulement la puissance frigorifique résiduelle. La répartition de la puissance frigorifique entre les deux évaporateurs peut être complexe à contrôler. Le but de la présente invention est de fournir un procédé de contrôle du système thermique permettant un fonctionnement stable et une gestion simple de la priorité entre les deux évaporateurs.

Ainsi, l'invention selon la revendication 1 propose un procédé de contrôle d'un système de conditionnement thermique pour véhicule automobile comprenant un circuit de fluide réfrigérant configuré pour faire circuler un fluide réfrigérant, le circuit de fluide réfrigérant comportant :
- Une boucle principale comportant successivement selon le sens de parcours du fluide réfrigérant :
   un dispositif de compression ,
   un condenseur configuré pour échanger de la chaleur avec un premier fluide caloporteur,
   un premier dispositif de détente,
   un premier évaporateur configuré pour échanger de la chaleur avec un deuxième fluide caloporteur,
   un deuxième dispositif de détente,
- Une branche de dérivation reliant un premier point de raccordement disposé sur la boucle principale et compris entre le condenseur et le premier dispositif de détente à un deuxième point de raccordement disposé sur la boucle principale entre le deuxième dispositif de détente et le dispositif de compression,
   la branche de dérivation comportant successivement selon le sens de parcours du fluide réfrigérant un troisième dispositif de détente et un deuxième évaporateur configuré pour échanger de la chaleur avec un troisième fluide caloporteur,
   le système de conditionnement thermique étant configuré pour que la température du deuxième fluide caloporteur en sortie du premier évaporateur atteigne une température de consigne et pour que la température du troisième fluide caloporteur en sortie du deuxième évaporateur atteigne une température de consigne,
   le procédé de contrôle comportant les étapes :
      - Recevoir une requête de priorité donnant priorité soit au refroidissement du deuxième fluide caloporteur soit au refroidissement du troisième fluide caloporteur,
      - Si la puissance thermique requise [pour atteindre simultanément la température de consigne du deuxième fluide caloporteur et du troisième fluide caloporteur est supérieure à la puissance thermique fournie [conjointement par le premier évaporateur et le deuxième évaporateur, augmenter le régime de rotation du dispositif de compression,
      - Si le régime de rotation du dispositif de compression a atteint une valeur maximale prédéterminée et si la priorité est donnée au refroidissement du troisième fluide caloporteur :
         Calculer une température de consigne modifiée du deuxième fluide caloporteur en sortie du premier évaporateur, supérieure à la température de consigne acquise,
         Ajuster une section de passage du fluide réfrigérant à travers le deuxième dispositif de détente de façon à ce que la température du deuxième fluide caloporteur atteigne la température de consigne modifiée,
         incrémenter la température de consigne modifiée du deuxième fluide caloporteur jusqu'à ce que la température du troisième fluide caloporteur atteigne la température de consigne.

On entend par le terme « la puissance thermique requise » la puissance thermique nécessaire pour atteindre simultanément la température de consigne du deuxième fluide caloporteur et du troisième fluide caloporteur. De manière similaire, on entend par le terme « la puissance thermique fournie » la puissance thermique qui est fournie conjointement par le premier évaporateur et le deuxième évaporateur. C'est donc la somme de la puissance thermique fournie par le premier évaporateur et de la puissance thermique fournie simultanément par le deuxième évaporateur.

La détermination de la puissance thermique requise comporte les sous-étapes :
- acquérir une température de consigne du deuxième fluide caloporteur en sortie du premier évaporateur,
- acquérir une température de consigne du troisième fluide caloporteur en sortie du deuxième évaporateur,
- déterminer la température du deuxième fluide caloporteur en sortie du premier évaporateur,
- déterminer la température du troisième fluide caloporteur en sortie du deuxième évaporateur,
- si la température déterminée du deuxième fluide caloporteur est supérieure à la température de consigne, augmenter le régime de rotation du dispositif de compression,
- si la température déterminée du troisième fluide caloporteur est supérieure à la température de consigne, augmenter le régime de rotation du dispositif de compression.

En d'autres termes, la branche de dérivation est disposée en parallèle d'une portion de boucle principale comportant le premier dispositif de détente, le premier évaporateur et le deuxième dispositif de détente.

Selon un aspect du procédé proposé, la température de consigne modifiée du deuxième fluide caloporteur en sortie du premier évaporateur est calculée par un premier régulateur proportionnel, intégral en fonction de la différence entre la température du troisième fluide caloporteur et la température de consigne du troisième fluide caloporteur.

Le procédé proposé comporte ainsi les étapes :
- calculer un premier régulateur proportionnel, intégral en fonction de la différence entre la température du troisième fluide caloporteur et la température de consigne du troisième fluide caloporteur,
- calculer la température de consigne modifiée du deuxième fluide caloporteur en additionnant la température de consigne acquise du deuxième fluide caloporteur et les paramètres de sortie du premier régulateur proportionnel, intégral.

Selon un aspect du procédé selon l'invention, si la priorité est donnée au refroidissement du troisième fluide caloporteur, la section de passage du fluide réfrigérant à travers le deuxième dispositif de détente est contrôlée par un deuxième régulateur proportionnel, intégral en fonction de la différence entre la température du deuxième fluide caloporteur et la température de consigne modifiée du deuxième fluide caloporteur.

Le procédé de contrôle selon l'invention comporte ainsi l'étape :
Diminuer la section de passage du fluide réfrigérant à travers le deuxième dispositif de détente de façon à augmenter la pression du fluide réfrigérant dans le premier évaporateur.

Selon un aspect du procédé selon l'invention, si la priorité est donnée au refroidissement du deuxième fluide caloporteur, la section de passage du fluide réfrigérant à travers le deuxième dispositif de détente est contrôlée par un deuxième régulateur proportionnel, intégral en fonction de la différence entre la température du deuxième fluide caloporteur et la température de consigne du deuxième fluide caloporteur.]

Selon un aspect de l'invention, la section de passage du fluide réfrigérant à travers le deuxième dispositif de détente est contrôlée par un deuxième régulateur proportionnel, intégral en fonction de la différence entre la température du deuxième fluide caloporteur et la température de consigne du deuxième fluide caloporteur.

Le procédé de contrôle selon l'invention comporte l'étape :
Augmenter la section de passage du fluide réfrigérant à travers le deuxième dispositif de détente de façon à réduire la pression du fluide réfrigérant dans le premier évaporateur.

Le procédé de contrôle selon l'invention comporte les étapes :
Si le régime de rotation du dispositif de compression a atteint une valeur maximale prédéterminée et si la priorité est donnée au refroidissement du deuxième fluide caloporteur:
   - Calculer une température de consigne modifiée du troisième fluide caloporteur en sortie du deuxième évaporateur, supérieure à la température de consigne acquise,
   - Ajuster une section de passage du fluide réfrigérant à travers le troisième dispositif de détente de façon à ce que la température du troisième fluide caloporteur atteigne la température de consigne modifiée,
incrémenter la température de consigne modifiée du troisième fluide caloporteur jusqu'à ce que la température du deuxième fluide caloporteur atteigne la température de consigne.

Selon un aspect du procédé proposé, la température de consigne modifiée du troisième fluide caloporteur en sortie du deuxième évaporateur est calculée par un troisième régulateur proportionnel, intégral en fonction de la différence entre la température du deuxième fluide caloporteur et la température de consigne du deuxième fluide caloporteur.

Le procédé de contrôle selon comporte les étapes :
- calculer un troisième régulateur proportionnel, intégral en fonction de la différence entre la température du deuxième fluide caloporteur et la température de consigne du deuxième fluide caloporteur,
- calculer la température de consigne modifiée du troisième fluide caloporteur en additionnant la température de consigne acquise du troisième fluide caloporteur et les paramètres de sortie du troisième régulateur proportionnel, intégral.

Selon un aspect du procédé proposé, si la priorité est donnée au refroidissement du troisième fluide caloporteur, la section de passage du fluide réfrigérant à travers le troisième dispositif de détente est contrôlée par un quatrième régulateur proportionnel, intégral en fonction de la différence entre la température du troisième fluide caloporteur et la température de consigne du troisième fluide caloporteur.

Selon un autre aspect du procédé proposé, si la priorité est donnée au refroidissement du deuxième fluide caloporteur, la section de passage du fluide réfrigérant à travers le troisième dispositif de détente est contrôlée par un quatrième régulateur proportionnel, intégral en fonction de la différence entre la température du troisième fluide caloporteur et la température de consigne modifiée du troisième fluide caloporteur.

Le procédé de contrôle comporte les étapes :
- déterminer une vitesse d'avancement du véhicule,
- déterminer la valeur maximale du régime de rotation du dispositif de compression en fonction de la vitesse d'avancement du véhicule.

Selon une caractéristique du procédé, le régime de rotation maximal admissible est compris entre 7000 tr/min et 8000 tr/min lorsque la vitesse d'avancement est supérieure à 70 km/h.

Selon une autre caractéristique du procédé, le régime de rotation maximal admissible est compris entre 3000 tr/min et 4000 tr/min lorsque la vitesse d'avancement est nulle.

Le procédé de contrôle selon l'invention comporte l'étape :
calculer un cinquième régulateur proportionnel, intégral configuré pour réguler le régime de rotation du dispositif de compression en fonction de la différence entre la température du deuxième fluide caloporteur en sortie du premier évaporateur et la température de consigne du deuxième fluide caloporteur en sortie du premier évaporateur.

Le procédé de contrôle selon l'invention comporte aussi l'étape :
calculer un sixième régulateur proportionnel, intégral configuré pour réguler le régime de rotation du dispositif de compression en fonction de la différence entre la température du troisième fluide caloporteur en sortie du deuxième évaporateur et la température de consigne du troisième fluide caloporteur en sortie du deuxième évaporateur.

Le procédé comporte également l'étape :
Additionner les paramètres de sortie du cinquième régulateur proportionnel, intégral et du sixième régulateur proportionnel, intégral,
contrôler le régime de rotation du dispositif de compression à partir de la somme des paramètres de sortie du cinquième régulateur proportionnel, intégral et du sixième régulateur proportionnel, intégral.

Selon une variante de mise en oeuvre du procédé de contrôle, dans laquelle le système de conditionnement thermique comporte un dispositif d'accumulation de fluide réfrigérant disposé sur la boucle principale entre le condenseur et le premier point de raccordement, le procédé de contrôle comportant les étapes :
- Déterminer une surchauffe de consigne du fluide réfrigérant en sortie du premier évaporateur,
- Déterminer une température du fluide réfrigérant en sortie du premier évaporateur,
- Déterminer une valeur de la surchauffe du fluide réfrigérant en sortie du premier évaporateur,
- Ajuster une section de passage du fluide réfrigérant à travers le premier dispositif de détente de façon à ce que la valeur de la surchauffe du fluide réfrigérant en sortie du premier évaporateur atteigne la surchauffe de consigne.

Selon un aspect du procédé de contrôle, la section de passage du fluide réfrigérant à travers le premier dispositif de détente est contrôlée par un septième régulateur proportionnel, intégral en fonction en fonction de la différence entre la valeur de la surchauffe du fluide réfrigérant en sortie du premier évaporateur et la surchauffe de consigne.

Dans un exemple d'application du procédé de contrôle, la surchauffe de consigne est comprise entre 5°C et 15°C.

L'invention, telle que définie dans la revendication 12, se rapporte également à un système de conditionnement thermique pour véhicule automobile, comprenant un circuit de fluide réfrigérant configuré pour faire circuler un fluide réfrigérant, le circuit de fluide réfrigérant comportant :
- Une boucle principale comportant successivement selon le sens de parcours du fluide réfrigérant :
   un dispositif de compression,
   un condenseur configuré pour échanger de la chaleur avec un premier fluide caloporteur,
   un premier dispositif de détente,
   un premier évaporateur configuré pour échanger de la chaleur avec un deuxième fluide caloporteur,
   un deuxième dispositif de détente,
- Une branche de dérivation reliant un premier point de raccordement disposé sur la boucle principale et compris entre le condenseur et le premier dispositif de détente à un deuxième point de raccordement disposé sur la boucle principale entre le deuxième dispositif de détente et le dispositif de compression, la branche de dérivation comportant successivement selon le sens de parcours du fluide réfrigérant un troisième dispositif de détente et un deuxième évaporateur configuré pour échanger de la chaleur avec un troisième fluide caloporteur,
- une unité électronique de contrôle configurée pour mettre en oeuvre le procédé décrit précédemment.

Selon un mode de réalisation, le système de conditionnement thermique comporte :
un circuit de fluide caloporteur configuré pour faire circuler un quatrième fluide caloporteur,
un premier échangeur de chaleur bifluide agencé conjointement sur le circuit de fluide réfrigérant et sur le circuit de fluide caloporteur de façon à permettre un échange de chaleur entre le fluide réfrigérant et le quatrième fluide caloporteur,
un dispositif d'accumulation de fluide réfrigérant disposé sur la boucle principale entre le condenseur et le premier point de raccordement,
le premier échangeur bifluide étant disposé sur la boucle principale de fluide réfrigérant entre le condenseur et le dispositif d'accumulation.

Selon un mode de réalisation, le système de conditionnement thermique comporte un deuxième échangeur de chaleur bifluide agencé conjointement sur le circuit de fluide réfrigérant et sur le circuit de fluide caloporteur de façon à permettre un échange de chaleur entre le fluide réfrigérant et le quatrième fluide caloporteur, le deuxième échangeur de chaleur bifluide étant disposé sur la boucle principale entre le dispositif d'accumulation et le premier point de raccordement.

De manière complémentaire, le système de conditionnement thermique comporte un échangeur de chaleur interne configuré pour permettre un échange de chaleur entre le fluide réfrigérant circulant dans la boucle principale en amont du premier point de raccordement et le fluide réfrigérant circulant dans la boucle principale en aval du deuxième dispositif de détente.

Selon un exemple d'application du système de conditionnement thermique, le premier fluide caloporteur est un flux d'air extérieur à un habitacle du véhicule, le deuxième fluide caloporteur est un flux d'air intérieur à un habitacle du véhicule. Le troisième fluide caloporteur est un liquide caloporteur configuré pour échanger de la chaleur avec une batterie de stockage d'énergie électrique du véhicule.

Selon un autre exemple d'application du système de conditionnement thermique, le premier fluide caloporteur est un flux d'air extérieur à un habitacle du véhicule, le deuxième fluide caloporteur est un liquide caloporteur configuré pour échanger de la chaleur avec une batterie de stockage d'énergie électrique du véhicule, le troisième fluide caloporteur est un flux d'air intérieur à un habitacle du véhicule. Autrement dit, les rôles du premier évaporateur 5 et du deuxième évaporateur 8 sont inversés par rapport au cas précédent.

De préférence, le circuit de fluide caloporteur comporte un premier radiateur configuré pour échanger de la chaleur entre le quatrième fluide caloporteur et un flux d'air intérieur à un habitacle du véhicule.

De préférence encore, le circuit de fluide caloporteur comporte un deuxième radiateur configuré pour échanger de la chaleur entre le quatrième fluide caloporteur et un flux d'air extérieur à un habitacle du véhicule.

Selon un mode de réalisation du système de conditionnement thermique, le circuit de fluide caloporteur comporte une première boucle de circulation comportant le premier radiateur et une première pompe configurée pour faire circuler le quatrième fluide caloporteur dans la première boucle de circulation.

Selon un mode de réalisation, le circuit de fluide caloporteur comporte aussi une deuxième boucle de circulation comportant le deuxième radiateur et un élément d'une chaine de traction électrique du véhicule.

Avantageusement, la deuxième boucle de circulation comporte une deuxième pompe configurée pour faire circuler le quatrième fluide caloporteur dans la deuxième boucle de circulation.

De préférence, le circuit de fluide caloporteur comporte une première branche de raccordement reliant fluidiquement la première boucle de circulation et la deuxième boucle de circulation.

En outre, le circuit de fluide caloporteur comporte une deuxième branche de raccordement reliant fluidiquement la première boucle de circulation et la deuxième boucle de circulation.

Selon un mode de réalisation, la première branche de raccordement relie un point de raccordement situé sur la première boucle de circulation et compris entre la deuxième pompe et le deuxième radiateur à un point de raccordement situé sur la deuxième boucle de circulation et compris entre le premier radiateur et la première pompe.

De plus, la deuxième branche de raccordement relie un point de raccordement situé sur la première boucle de circulation et compris entre le deuxième radiateur et l'élément à un point de raccordement situé sur la deuxième boucle de circulation et compris entre la première pompe et le point de raccordement entre la première boucle de circulation et la première branche de raccordement.

D'autres caractéristiques et avantages de l'invention apparaîtront à la lecture de la description détaillée des modes de réalisation donnée à titre d'exemples non limitatifs, accompagnée des figures ci-dessous :
- La figure 1 représente une vue schématique d'un système de conditionnement thermique selon un premier mode de réalisation, mettant en oeuvre le procédé selon l'invention,
- La figure 2 représente une vue schématique d'un système de conditionnement thermique selon un deuxième mode de réalisation, mettant en oeuvre le procédé selon l'invention,
- La figure 3 est un schéma fonctionnel du procédé selon l'invention,

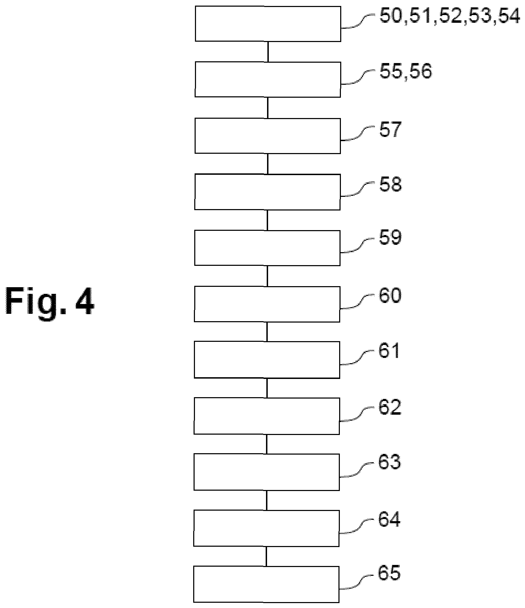

- La figure 4 est un schéma bloc du procédé selon l'invention.

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations. De même, dans les modes de réalisation dans lesquels le premier élément est optionnel, le deuxième élément peut être présent alors que le premier élément n'est pas présent. Dans la description qui suit, le terme « un premier élément en amont d'un deuxième élément » signifie que le premier élément est placé avant le deuxième élément par rapport au sens de circulation d'un fluide. De manière analogue, le terme « un premier élément en aval d'un deuxième élément » signifie que le premier élément est placé après le deuxième élément par rapport au sens de circulation du fluide considéré.

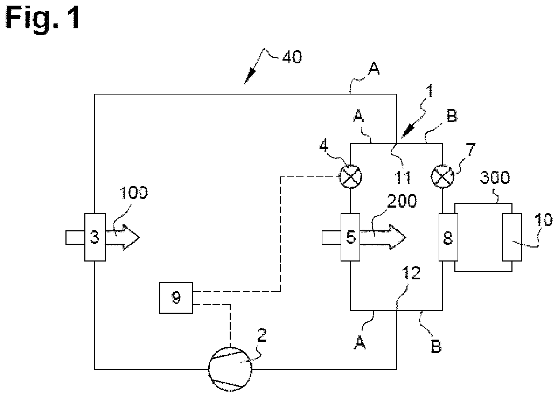

On a représenté sur la figure 1 un système de conditionnement thermique 40 pour véhicule automobile, selon un premier mode de réalisation simple. Le système de conditionnement thermique 40 comprend un circuit de fluide réfrigérant 1 configuré pour faire circuler un fluide réfrigérant, le circuit de fluide réfrigérant 1 comportant :
- Une boucle principale A comportant successivement selon le sens de parcours du fluide réfrigérant :
   un dispositif de compression 2,
   un condenseur 3 configuré pour échanger de la chaleur avec un premier fluide caloporteur 100,
   un premier dispositif de détente 4,
   un premier évaporateur 5 configuré pour échanger de la chaleur avec un deuxième fluide caloporteur 200,
   un deuxième dispositif de détente 6,
- Une branche de dérivation B reliant un premier point de raccordement 11 disposé sur la boucle principale A et compris entre le condenseur 3 et le premier dispositif de détente 4 à un deuxième point de raccordement 12 disposé sur la boucle principale A entre le deuxième dispositif de détente 6 et le dispositif de compression 2,
   la branche de dérivation B comportant successivement selon le sens de parcours du fluide réfrigérant un troisième dispositif de détente 7 et un deuxième évaporateur 8 configuré pour échanger de la chaleur avec un troisième fluide caloporteur 300,
- une unité électronique de contrôle 9.

L'unité électronique de contrôle 9 est configurée pour mettre en oeuvre le procédé selon l'invention, qui sera décrit plus loin.

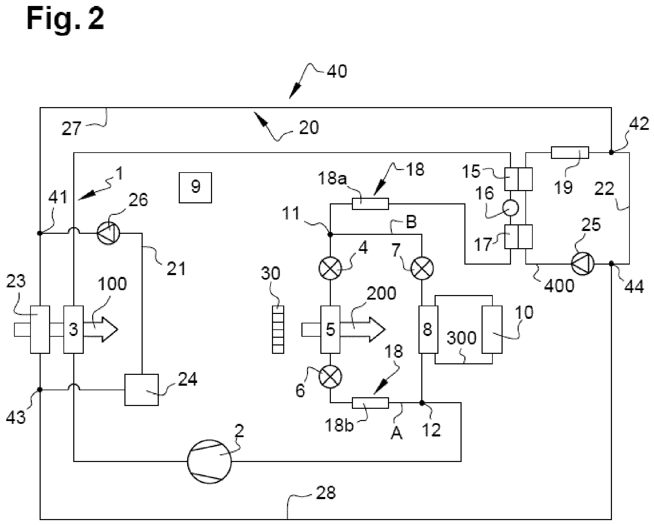

L'unité électronique de contrôle 9 reçoit les informations de différents capteurs mesurant notamment les caractéristiques du fluide réfrigérant en divers points du circuit. L'unité électronique de contrôle 9 reçoit également les consignes demandées par les occupants du véhicule, comme par exemple la température souhaitée à l'intérieur de l'habitacle. L'unité électronique 9 met en oeuvre des lois de contrôle permettant le pilotage des différents actionneurs, afin d'assurer le contrôle du système de conditionnement thermique 40. Sur les figures 1 et 2, les traits en pointillés schématisent la connexion électrique entre l'unité électronique de contrôle 9, le dispositif de compression 2 et les dispositifs de détente 4, 6, 7. Pour simplifier, les différents capteurs présents sur le circuit de fluide réfrigérant n'ont pas été représentés.

Sur l'exemple illustré sur les figures 1 et 2, le premier fluide caloporteur 100 est un flux d'air extérieur à un habitacle du véhicule, le deuxième fluide caloporteur 200 est un flux d'air intérieur à un habitacle du véhicule. Le troisième fluide caloporteur 300 est un liquide caloporteur configuré pour échanger de la chaleur avec une batterie 10 de stockage d'énergie électrique du véhicule.

Autrement dit, le deuxième fluide caloporteur 200 est un flux d'air destiné à être envoyé à l'intérieur de l'habitacle du véhicule, afin d'assurer le conditionnement thermique de l'habitacle. Le système de conditionnement thermique 40 permet notamment de réguler la température ainsi que le taux d'humidité de l'air présent dans l'habitacle du véhicule, afin d'assurer le confort des passagers. Le premier évaporateur 5 est disposé dans une installation de chauffage, ventilation et climatisation, souvent désignée par le terme Anglais « HVAC » signifiant « Heating, Ventilating and Air Conditioning ». Cette installation n'a pas été représentée sur les figures. Un groupe moto-ventilateur, non représenté sur les figures, est disposé dans l'installation de chauffage, ventilation et climatisation afin d'augmenter si nécessaire le débit du flux d'air intérieur.

On entend par flux d'air extérieur un flux d'air qui n'est pas à destination de l'habitacle du véhicule. Le condenseur 3 est ici disposé en face avant du véhicule, et reçoit le flux d'air généré notamment par l'avancement du véhicule. Un groupe moto-ventilateur, non représenté, peut être activé afin d'augmenter si nécessaire le débit du flux d'air extérieur.

En fonctionnement normal du système de conditionnement thermique 40, un fluide réfrigérant circule dans au moins une partie du circuit 1 de fluide réfrigérant. Le fluide réfrigérant utilisé ici est un fluide chimique tel que le R1234yf. D'autres fluides réfrigérants pourraient être employés, comme par exemple le R134a.

Le dispositif de compression 2 est configuré pour faire passer un débit de fluide réfrigérant d'une basse pression à une haute pression, la haute pression étant supérieure à la basse pression. Le dispositif de compression 2 peut être un compresseur électrique, c'est-à-dire un compresseur dont les pièces mobiles sont entrainées par un moteur électrique. Le dispositif de compression 2 comporte un côté aspiration du fluide réfrigérant à basse pression, encore appelé entrée du dispositif de compression, et un côté refoulement du fluide réfrigérant à haute pression, encore appelé sortie du dispositif de compression. Les pièces mobiles internes du compresseur font passer le fluide réfrigérant d'une basse pression côté entrée à une haute pression côté sortie. Après détente dans un ou plusieurs organes de détente du circuit, le fluide réfrigérant revient à l'entrée du compresseur 2 et recommence un nouveau cycle. Le contrôle du régime de rotation du moteur électrique permet de contrôler le débit de fluide réfrigérant refoulé par le dispositif de compression, qui correspond au débit parcourant le circuit de fluide réfrigérant.

Le circuit de fluide réfrigérant comporte une boucle principale A qui définit un circuit fermé, et une branche de dérivation B. La branche de dérivation B est disposée en parallèle d'une portion de boucle principale A comportant le premier dispositif de détente 4, le premier évaporateur 5 et le deuxième dispositif de détente 6. La boucle principale A et la branche de dérivation B sont connectées fluidiquement au niveau du premier point de raccordement 11 ainsi qu'au niveau du deuxième point de raccordement 12. Le premier point de raccordement 11 est un point de divergence, c'est-à-dire que le débit de fluide réfrigérant qui circule en amont du premier point de raccordement 11 peut se séparer entre une partie qui continue à emprunter la boucle principale A et une partie complémentaire qui emprunte la branche de dérivation B. Le deuxième point de raccordement 12 est un point de convergence, c'est-à-dire que le débit de fluide réfrigérant provenant de la boucle principale A y rejoint le débit provenant de la branche de dérivation B. Les débits rassemblés en un seul débit rejoignent ensuite le dispositif de compression 2.

La pression du fluide réfrigérant en sortie du deuxième dispositif de détente 6 est donc égale à la pression en sortie du deuxième évaporateur 8. Par « pression égale », on entend égale aux différences de pertes de charges près. En effet, la canalisation s'étendant entre la sortie du deuxième dispositif de détente 6 et le deuxième point de raccordement 12 n'est pas forcément identique à la canalisation s'étendant entre la sortie du deuxième évaporateur 8 et le deuxième point de raccordement 12. Par conséquent, la perte de charge entre la sortie du deuxième dispositif de détente 6 et le deuxième point de raccordement 12 n'est pas strictement identique à la perte de charge entre la sortie du deuxième évaporateur 8 et le deuxième point de raccordement 12, mais on considérera l'écart négligeable.

Le premier dispositif de détente 4 est ici un détendeur électronique. On entend par là que le dispositif de détente possède un obturateur mobile dans un conduit de circulation de fluide réfrigérant, cet obturateur étant commandé par un moteur électrique et un circuit électronique. Le déplacement de l'obturateur permet de modifier la section de passage du fluide réfrigérant dans le conduit et ainsi d'ajuster le niveau de détente réalisé par le dispositif de détente. Pour une position donnée de l'obturateur mobile, la section de passage est l'aire transversale du tube équivalent permettant d'assurer le même débit de fluide que le dispositif de détente. La section de passage est ainsi une fonction de la position de l'obturateur mobile. De la même manière, dans l'exemple illustré le deuxième dispositif de détente 6 est un détendeur électronique. Le troisième dispositif de détente 7 est aussi un détendeur électronique.

Un cas typique d'utilisation du dispositif de conditionnement thermique 40 est le suivant : on souhaite réguler simultanément la température de l'habitacle du véhicule ainsi que la température de la batterie de stockage d'énergie électrique. Pour cela, le premier évaporateur 5 assure le conditionnement thermique du deuxième fluide caloporteur 200, autrement dit le flux d'air à destination de l'habitacle du véhicule. Le deuxième évaporateur 8 assure le conditionnement thermique du troisième fluide caloporteur, qui est ici un liquide caloporteur tel un mélange eau-glycol. Ce mélange eau-glycol réalise un échange thermique avec la batterie et permet de réguler sa température. Le condenseur 3 permet de dissiper dans le flux d'air extérieur la chaleur du fluide réfrigérant à haute pression.

Lorsque le deuxième dispositif de détente 6 réalise une détente du fluide réfrigérant, la pression est plus élevée dans le premier évaporateur 5 que dans le deuxième évaporateur 8. Il est ainsi possible d'obtenir deux températures d'évaporation différentes, la température d'évaporation dans le premier évaporateur 5 étant plus élevée que la température d'évaporation dans le deuxième évaporateur 8. Il est ainsi possible d'obtenir une puissance de refroidissement élevée au niveau du deuxième évaporateur 8, qui est ici couplé à une batterie du véhicule. Cette configuration est intéressante notamment lorsque la conductance thermique de la batterie est faible. En effet, une conductance thermique faible est peu favorable à l'obtention d'une puissance thermique élevée, et il est alors intéressant de pouvoir augmenter l'écart entre la température du fluide à refroidir et la température d'évaporation à laquelle travaille l'évaporateur.

L'invention propose un procédé de contrôle d'un système de conditionnement thermique 40 pour véhicule automobile comprenant un circuit de fluide réfrigérant 1 configuré pour faire circuler un fluide réfrigérant, le circuit de fluide réfrigérant 1 comportant :
- Une boucle principale A comportant successivement selon le sens de parcours du fluide réfrigérant :
   un dispositif de compression 2,
   un condenseur 3 configuré pour échanger de la chaleur avec un premier fluide caloporteur 100,
   un premier dispositif de détente 4,
   un premier évaporateur 5 configuré pour échanger de la chaleur avec un deuxième fluide caloporteur 200,
   un deuxième dispositif de détente 6,
- Une branche de dérivation B reliant un premier point de raccordement 11 disposé sur la boucle principale A et compris entre le condenseur 3 et le premier dispositif de détente 4 à un deuxième point de raccordement 12 disposé sur la boucle principale A entre le deuxième dispositif de détente 6 et le dispositif de compression 2,

la branche de dérivation B comportant successivement selon le sens de parcours du fluide réfrigérant un troisième dispositif de détente 7 et un deuxième évaporateur 8 configuré pour échanger de la chaleur avec un troisième fluide caloporteur 300,
le système de conditionnement thermique étant configuré pour que la température T1_mes du deuxième fluide caloporteur 200 en sortie du premier évaporateur 5 atteigne une température de consigne T1_cons et pour que la température T2_mes du troisième fluide caloporteur 300 en sortie du deuxième évaporateur 8 atteigne une température de consigne T2_cons,
le procédé de contrôle comportant les étapes :
   - Recevoir une requête de priorité donnant priorité soit au refroidissement du deuxième fluide caloporteur 200 soit au refroidissement du troisième fluide caloporteur 300 (étape 50),
   - Si la puissance thermique requise pour atteindre simultanément la température de consigne du deuxième fluide caloporteur 200 et du troisième fluide caloporteur 300 est supérieure à la puissance thermique fournie conjointement par le premier évaporateur 5 et le deuxième évaporateur 8, augmenter le régime de rotation du dispositif de compression 2 (étape 51),
   - Si le régime de rotation du dispositif de compression 2 a atteint une valeur maximale prédéterminée N_max et si la priorité est donnée au refroidissement du troisième fluide caloporteur 300 :
      Calculer une température de consigne modifiée T1_mod du deuxième fluide caloporteur 200 en sortie du premier évaporateur 5, supérieure à la température de consigne acquise T1_cons (étape 52),
      Ajuster une section de passage du fluide réfrigérant à travers le deuxième dispositif de détente 6 de façon à ce que la température du deuxième fluide caloporteur 200 atteigne la température de consigne modifiée T1_mod (étape 53),
      incrémenter la température de consigne modifiée T1_mod du deuxième fluide caloporteur 200 jusqu'à ce que la température T2_mes du troisième fluide caloporteur 300 atteigne la température de consigne T2_cons (étape 54).

On entend par le terme « puissance thermique requise » la puissance thermique nécessaire pour atteindre simultanément la température de consigne du deuxième fluide caloporteur 200 et du troisième fluide caloporteur 300. De manière similaire, on entend par le terme « puissance thermique fournie » la puissance thermique qui est fournie conjointement par le premier évaporateur 5 et le deuxième évaporateur 8. C'est donc la somme de la puissance thermique fournie par le premier évaporateur et de la puissance thermique fournie simultanément par le deuxième évaporateur.

Tant que la puissance thermique requise pour atteindre simultanément la température de consigne du deuxième fluide caloporteur 200 et du troisième fluide caloporteur 300 est inférieure à la puissance thermique maximale que le système peut fournir, il n'y a pas besoin de définir une priorité entre les fluides caloporteurs. En effet, le système est capable de fonctionner de manière à ce que le premier évaporateur 5 et le deuxième évaporateur 8 parviennent respectivement à réguler thermiquement le flux de deuxième fluide caloporteur 200 et de troisième fluide caloporteur 300 à leur température de consigne respective.

A un instant donné, lorsque la puissance thermique requise est supérieure à la puissance fournie, le régime de rotation du dispositif de compression 2 est augmenté. Ainsi, le débit de fluide réfrigérant augmente, et par là la puissance thermique fournie. Tant que la puissance thermique requise reste supérieure à la puissance fournie, le régime de rotation du dispositif de compression est augmenté, jusqu'à éventuellement atteindre le régime de rotation maximal du dispositif de compression 2. La puissance fournie ne peut alors plus augmenter, et la puissance thermique fournie est égale à la puissance maximale.

Lorsque la puissance thermique requise pour atteindre simultanément la température de consigne du deuxième fluide caloporteur 200 et du troisième fluide caloporteur 300 est supérieure à la puissance thermique maximale que le système peut fournir, il n'est plus possible que le deuxième fluide caloporteur 200 et le troisième fluide caloporteur 300 atteignent tous deux simultanément leur température de consigne respective. A titre d'exemple, une telle situation se produit lorsque le condenseur 3 est en mesure de dissiper 10 kilowatt, alors que le besoin en refroidissement au niveau du premier évaporateur 5 est de 7 kilowatt et que le besoin en refroidissement au niveau du deuxième évaporateur 8 est de 5 kilowatt. La puissance de refroidissement totale requise est ainsi de 12 kW, tandis que la puissance maximale qui peut être fournie est seulement de 10 kW. La répartition de la puissance thermique entre le premier évaporateur 5 et le deuxième évaporateur 8 donne ainsi lieu à un arbitrage.

Une requête de priorité permet ainsi de définir lequel du deuxième fluide caloporteur 200 ou du troisième fluide caloporteur 300 est prioritaire. Le fluide caloporteur défini comme prioritaire recevra la puissance thermique nécessaire pour réguler sa température à la température de consigne. Le fluide caloporteur défini comme non prioritaire recevra seulement la différence entre la puissance maximale qui peut être fournie et la puissance attribuée au fluide caloporteur défini comme prioritaire. La température du fluide caloporteur défini comme non prioritaire ne pourra donc pas être régulée à la température de consigne souhaitée. On peut considérer qu'il est équivalent de définir un fluide caloporteur comme prioritaire ou bien de définir l'évaporateur associé comme prioritaire. Ainsi, dire que le deuxième fluide caloporteur 200 est défini comme prioritaire revient à dire que le premier évaporateur 5 est défini comme prioritaire. De même, dire que le troisième fluide caloporteur 300 est défini comme prioritaire revient à dire que le deuxième évaporateur 8 est défini comme prioritaire. La requête de priorité est gérée par l'unité électronique de contrôle 9 en fonction des conditions de fonctionnement du véhicule et des souhaits des occupants du véhicule. Le procédé proposé a pour but d'assurer un fonctionnement stable du système avec une bonne répartition de la puissance entre les différents fluides caloporteurs.

Lorsque la priorité est donnée au refroidissement du troisième fluide caloporteur 300, la sous-étape consistant à ajuster une section de passage du fluide réfrigérant à travers le deuxième dispositif de détente 6 permet d'augmenter la pression du fluide réfrigérant dans le premier évaporateur 5. Ainsi, la pression d'évaporation est plus élevée dans le premier évaporateur 5 que dans le deuxième évaporateur 8. La température d'évaporation du fluide réfrigérant dans le deuxième évaporateur 8 est donc inférieure à la température d'évaporation du fluide réfrigérant dans le premier évaporateur 5.

La détermination de la puissance thermique requise comporte les sous-étapes :
- acquérir une température de consigne T1_cons du deuxième fluide caloporteur 200 en sortie du premier évaporateur 5,
- acquérir une température de consigne T2_cons du troisième fluide caloporteur 300 en sortie du deuxième évaporateur 8,
- déterminer la température T1_mes du deuxième fluide caloporteur 200 en sortie du premier évaporateur 5,
- déterminer la température T2_mes du troisième fluide caloporteur 300 en sortie du deuxième évaporateur 8,
- si la température déterminée T1_mes du deuxième fluide caloporteur 200 est supérieure à la température de consigne T1_cons, augmenter le régime de rotation du dispositif de compression 2,
- si la température déterminée T2_mes du troisième fluide caloporteur 300 est supérieure à la température de consigne T2_cons, augmenter le régime de rotation du dispositif de compression 2.

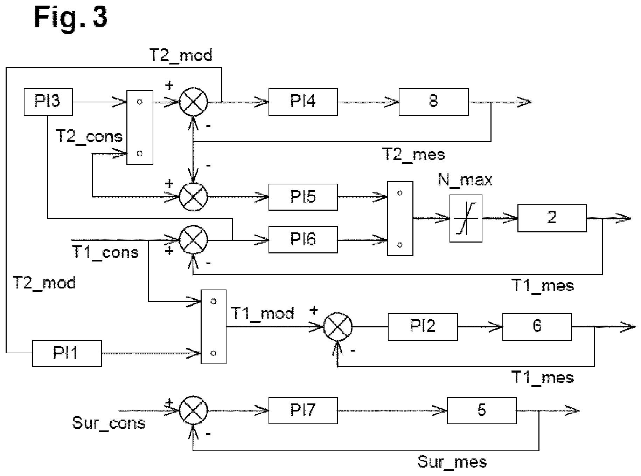

Comme schématisé sur la figure 3, la température de consigne modifiée T1_mod du deuxième fluide caloporteur 200 en sortie du premier évaporateur 5 est calculée par un premier régulateur proportionnel, intégral PI1 en fonction de la différence entre la température T2_mes du troisième fluide caloporteur 300 et la température de consigne T2_cons du troisième fluide caloporteur 300. Ce calcul est réalisé lorsque la requête de priorité donne priorité au refroidissement du troisième fluide caloporteur 300, c'est-à-dire priorité à l'action du deuxième évaporateur 8.

Pour mener à bien le calcul de la température de consigne modifiée T1_mod du deuxième fluide caloporteur 200, le procédé de contrôle comporte ainsi les étapes :
- calculer un premier régulateur proportionnel, intégral PI1 en fonction de la différence entre la température T2_mes du troisième fluide caloporteur 300 et la température de consigne T2_cons du troisième fluide caloporteur 300 (étape 55),
- calculer la température de consigne modifiée T1_mod du deuxième fluide caloporteur 200 en additionnant la température de consigne acquise T1_cons du deuxième fluide caloporteur et les paramètres de sortie du premier régulateur proportionnel, intégral PI1 (étape 56).

Si la priorité est donnée au refroidissement du troisième fluide caloporteur 300, la section de passage du fluide réfrigérant à travers le deuxième dispositif de détente 6 est contrôlée par un deuxième régulateur proportionnel, intégral PI2 en fonction de la différence entre la température T1_mes du deuxième fluide caloporteur 200 et la température de consigne modifiée T1_mod du deuxième fluide caloporteur 200.

Le procédé de contrôle selon l'invention comporte ainsi l'étape :
Diminuer la section de passage du fluide réfrigérant à travers le deuxième dispositif de détente 6 de façon à augmenter la pression du fluide réfrigérant dans le premier évaporateur 5. (étape 57)

La section de passage du fluide réfrigérant à travers le deuxième dispositif de détente 6 est ainsi contrôlée par un deuxième régulateur proportionnel, intégral PI2 en fonction de la différence entre la température T1_mes du deuxième fluide caloporteur 200 et la température de consigne T1_cons du deuxième fluide caloporteur 200.

Si la priorité est donnée au refroidissement du deuxième fluide caloporteur 200, la section de passage du fluide réfrigérant à travers le deuxième dispositif de détente 6 est contrôlée par un deuxième régulateur proportionnel, intégral PI2 en fonction de la différence entre la température T1_mes du deuxième fluide caloporteur 200 et la température de consigne T1_cons du deuxième fluide caloporteur 200.

Lorsque la priorité de refroidissement est donnée au deuxième fluide caloporteur 200, le procédé de contrôle selon l'invention comporte l' étape : Augmenter la section de passage du fluide réfrigérant à travers le deuxième dispositif de détente 6 de façon à réduire la pression du fluide réfrigérant dans le premier évaporateur 5. (étape 58). La pression d'évaporation dans le premier évaporateur 5 peut ainsi être abaissée, ce qui abaisse également la température d'évaporation et tend à augmenter la puissance de refroidissement fournie par le premier évaporateur 5.

La température du deuxième fluide caloporteur 200, autrement dit sa température réelle, peut être mesurée en sortie du premier évaporateur 5. Par exemple, un capteur de mesure de température peut être fixé sur une partie des ailettes de l'évaporateur 5. La température du deuxième fluide caloporteur 200 peut aussi être mesurée un peu plus loin en aval du deuxième fluide caloporteur 200. L'échauffement du fluide caloporteur en aval du premier évaporateur 5, entre l'évaporateur 5 et le point de mesure, peut par exemple être modélisé et pris en compte pour recalculer la valeur en sortie du premier évaporateur 5. De même, la température du troisième fluide caloporteur 300 peut être mesurée en sortie du deuxième évaporateur 8.

Le procédé de contrôle selon l'invention comporte les étapes :
Si le régime de rotation du dispositif de compression 2 a atteint une valeur maximale prédéterminée N_max et si la priorité est donnée au refroidissement du deuxième fluide caloporteur 200:
- Calculer une température de consigne modifiée T2_mod du troisième fluide caloporteur 300 en sortie du deuxième évaporateur 8, supérieure à la température de consigne acquise T2_cons,
- Ajuster une section de passage du fluide réfrigérant à travers le troisième dispositif de détente 7 de façon à ce que la température du troisième fluide caloporteur 300 atteigne la température de consigne modifiée T2_mod, incrémenter la température de consigne modifiée T2_mod du troisième fluide caloporteur 300 jusqu'à ce que la température T1_mes du deuxième fluide caloporteur 200 atteigne la température de consigne T1_cons (étape 59).

La température de consigne modifiée T2_mod du troisième fluide caloporteur 300 en sortie du deuxième évaporateur 8 est calculée par un troisième régulateur proportionnel, intégral PI3 en fonction de la différence entre la température T1_mes du deuxième fluide caloporteur 200 et la température de consigne T1_cons du deuxième fluide caloporteur 200. Ce calcul est réalisé lorsque la requête de priorité donne priorité au refroidissement du deuxième fluide caloporteur 200, c'est-à-dire priorité à l'action du premier évaporateur 5.

Pour cela, le procédé de contrôle selon comporte les étapes :
- calculer un troisième régulateur proportionnel, intégral PI3 en fonction de la différence entre la température T1_mes du deuxième fluide caloporteur 200 et la température de consigne T1_cons du deuxième fluide caloporteur 200,
- calculer la température de consigne modifiée T2_mod du troisième fluide caloporteur 300 en additionnant la température de consigne acquise T2_cons du troisième fluide caloporteur 300 et les paramètres de sortie du troisième régulateur proportionnel, intégral PI3 (étape 60).

Si la priorité est donnée au refroidissement du troisième fluide caloporteur 300, la section de passage du fluide réfrigérant à travers le troisième dispositif de détente 7 est contrôlée par un quatrième régulateur proportionnel, intégral PI4 en fonction de la différence entre la température T2_mes du troisième fluide caloporteur 300 et la température de consigne T2_cons du troisième fluide caloporteur 300.

Si la priorité est donnée au refroidissement du deuxième fluide caloporteur 200, la section de passage du fluide réfrigérant à travers le troisième dispositif de détente 7 est contrôlée par un quatrième régulateur proportionnel, intégral PI4 en fonction de la différence entre la température T2_mes du troisième fluide caloporteur 300 et la température de consigne modifiée T2_mod du troisième fluide caloporteur 300.

Autrement dit, la structure du contrôle du troisième dispositif de détente 7 est inchangée lorsque le fluide caloporteur prioritaire change. C'est le paramètre servant de référence au régulateur proportionnel, intégral qui est modifié. Le contrôle reste stable lors des transitions de priorité.

La valeur maximale N_max du régime de rotation du compresseur 2 n'est ici pas une valeur constante. En effet, le régime maximal admissible au sens de l'endurance mécanique du compresseur 2 n'est pas forcément admissible par les passagers du véhicule en raison du bruit engendré.

Le procédé de contrôle comporte ainsi les étapes :
- déterminer une vitesse d'avancement du véhicule,
- déterminer la valeur maximale N_max du régime de rotation du dispositif de compression 2 en fonction de la vitesse d'avancement du véhicule (étape 61).

Le régime de rotation maximal admissible N_max est compris entre 7000 tr/min et 8000 tr/min lorsque la vitesse d'avancement est supérieure à 70 km/h. Le régime de rotation maximal admissible N_max est compris entre 3000 tr/min et 4000 tr/min lorsque la vitesse d'avancement est nulle. Lorsque le bruit de fond du à l'avancement du véhicule augmente, une vitesse de rotation plus élevée du compresseur 2 peut être admise. En effet, le bruit engendré par le dispositif de compression 2 est alors partiellement masqué par le bruit de fond.

Afin de contrôler le régime de rotation du dispositif de compression 2, le procédé de contrôle selon l'invention comporte l'étape :
calculer un cinquième régulateur proportionnel, intégral PI5 configuré pour réguler le régime de rotation du dispositif de compression 2 en fonction de la différence entre la température T1_mes du deuxième fluide caloporteur 200 en sortie du premier évaporateur 5 et la température de consigne T1_cons du deuxième fluide caloporteur 200 en sortie du premier évaporateur 5 (étape 62).

Le procédé de contrôle selon l'invention comporte aussi l'étape :
calculer un sixième régulateur proportionnel, intégral PI6 configuré pour réguler le régime de rotation du dispositif de compression 2 en fonction de la différence entre la température T2_mes du troisième fluide caloporteur 300 en sortie du deuxième évaporateur 8 et la température de consigne T2_cons du troisième fluide caloporteur 300 en sortie du deuxième évaporateur 8 (étape 63).

Le procédé comporte également l'étape :
Additionner les paramètres de sortie du cinquième régulateur proportionnel, intégral PI5 et du sixième régulateur proportionnel, intégral PI6,
contrôler le régime de rotation du dispositif de compression 2 à partir de la somme des paramètres de sortie du cinquième régulateur proportionnel, intégral PI5 et du sixième régulateur proportionnel, intégral PI6.

Selon une variante de mise en oeuvre du procédé de contrôle, dans laquelle le système de conditionnement thermique comporte un dispositif d'accumulation 16 de fluide réfrigérant disposé sur la boucle principale entre le condenseur 3 et le premier point de raccordement 11, le procédé de contrôle comportant les étapes :
- Déterminer une surchauffe de consigne Sur_Cons du fluide réfrigérant en sortie du premier évaporateur 5,
- Déterminer une température du fluide réfrigérant en sortie du premier évaporateur 5,
- Déterminer une valeur de la surchauffe Sur_mes du fluide réfrigérant en sortie du premier évaporateur 5,
- Ajuster une section de passage du fluide réfrigérant à travers le premier dispositif de détente 4 de façon à ce que la valeur de la surchauffe Sur_mes du fluide réfrigérant en sortie du premier évaporateur 5 atteigne la surchauffe de consigne Sur_cons (étape 65).

Pour rappel, la surchauffe d'un fluide réfrigérant à une pression donnée est la différence entre la température réelle du fluide réfrigérant, et la température de saturation correspondant à la pression considérée. Pour un fluide réfrigérant diphasique, on ne peut pas parler de surchauffe. Une surchauffe nulle correspond à un fluide réfrigérant entièrement sous forme gazeuze, dont la température est égale à la température de saturation.

La section de passage du fluide réfrigérant à travers le premier dispositif de détente 4 est contrôlée par un septième régulateur proportionnel, intégral PI7 en fonction en fonction de la différence entre la valeur de la surchauffe Sur_mes du fluide réfrigérant en sortie du premier évaporateur 5 et la surchauffe de consigne Sur_cons.

Dans un exemple d'application du procédé de contrôle, la surchauffe de consigne Sur_cons est comprise entre 5°C et 15°C. Cette valeur de surchauffe en sortie du premier évaporateur 5 permet d'optimiser l'efficacité du premier évaporateur 5 et aussi de garantir que le titre du fluide réfrigérant en entrée du dispositif de compression 2 soit dans la bonne plage, c'est-à-dire qu'il n'y ait pas une quantité trop importante de réfrigérant liquide qui arrive à l'entrée basse pression du compresseur 2.

La figure 2 représente un deuxième mode de réalisation du système de conditionnement thermique 40. Dans ce mode de réalisation, des échangeurs de chaleur additionnels sont utilisés.

Ainsi, le système de conditionnement thermique 40 comporte :
un circuit de fluide caloporteur 20 configuré pour faire circuler un quatrième fluide caloporteur 400,
un premier échangeur de chaleur bifluide 15 agencé conjointement sur le circuit de fluide réfrigérant 1 et sur le circuit de fluide caloporteur 20 de façon à permettre un échange de chaleur entre le fluide réfrigérant et le quatrième fluide caloporteur 400,
un dispositif d'accumulation 16 de fluide réfrigérant disposé sur la boucle principale A entre le condenseur 3 et le premier point de raccordement 11,
le premier échangeur bifluide 15 étant disposé sur la boucle principale de fluide réfrigérant A entre le condenseur 3 et le dispositif d'accumulation 16.

Le dispositif d'accumulation 16 est une bouteille déshydratante. Le quatrième fluide caloporteur 400 est, comme le troisième fluide caloporteur 300, un mélange eau-glycol.

Sur l'exemple de la figure 2, le système de conditionnement thermique comporte un deuxième échangeur de chaleur bifluide 17 agencé conjointement sur le circuit de fluide réfrigérant 1 et sur le circuit de fluide caloporteur 20 de façon à permettre un échange de chaleur entre le fluide réfrigérant et le quatrième fluide caloporteur 400, le deuxième échangeur de chaleur bifluide 17 étant disposé sur la boucle principale A entre le dispositif d'accumulation 16 et le premier point de raccordement 11.

Autrement dit, premier échangeur bifluide 15 permet de finir la condensation dans les cas où le condenseur 3 ne permet pas un échange de chaleur suffisant pour condenser la totalité du débit de fluide réfrigérant le traversant. Le deuxième échangeur de chaleur bifluide 17 assure le sous-refroidissement du fluide réfrigérant sortant de la bouteille déshydratante 16. Par rapport à la configuration de la figure 1, la configuration de la figure 2 permet d'augmenter la puissance thermique totale de refroidissement. Les performances du système de conditionnement thermique sont donc améliorées.

Le système de conditionnement thermique 40 comporte un échangeur de chaleur interne 18 configuré pour permettre un échange de chaleur entre le fluide réfrigérant circulant dans la boucle principale A en amont du premier point de raccordement 11 et le fluide réfrigérant circulant dans la boucle principale A en aval du deuxième dispositif de détente 6.

L'échangeur de chaleur interne 18a, 18b permet un échange de chaleur entre le fluide réfrigérant à haute pression circulant dans la portion de circuit située en aval du deuxième échangeur bifluide 17 et en amont du premier point de raccordement 11, et le fluide réfrigérant à basse pression circulant dans la portion de circuit située en aval du deuxième dispositif de détente 6 et en amont du deuxième point de raccordement 12. Le signe 18a désigne la partie de l'échangeur interne dans laquelle circule le fluide réfrigérant à haute pression, et le signe 18b désigne la partie de l'échangeur interne dans laquelle circule le fluide réfrigérant à basse pression. Sur le schéma de principe de la figure 2, 18a et 18b sont éloignées l'une de l'autre, ce qui n'est pas le cas en réalité. L'échangeur de chaleur interne 18 contribue ainsi à augmenter la puissance de refroidissement maximale.

Le circuit de fluide caloporteur 20 comporte un premier radiateur 19 configuré pour échanger de la chaleur entre le quatrième fluide caloporteur 400 et un flux d'air intérieur à un habitacle du véhicule. Autrement dit, le premier radiateur 19 sert au chauffage de l'habitacle. Le flux d'air intérieur correspond ici au deuxième fluide caloporteur 200.

Le circuit de fluide caloporteur 20 comporte aussi un deuxième radiateur 23 configuré pour échanger de la chaleur entre le quatrième fluide caloporteur 400 et un flux d'air extérieur à un habitacle du véhicule. Le deuxième radiateur 23 peut être disposé en amont du condenseur 3. Autrement dit, le flux d'air extérieur traverse d'abord le deuxième radiateur 23 puis le condenseur 3. Le premier fluide caloporteur 100 correspond ici au flux d'air extérieur.

Le circuit de fluide caloporteur 20 comporte une première boucle de circulation 21 comportant le premier radiateur 19 et une première pompe 25 configurée pour faire circuler le quatrième fluide caloporteur 400 dans la première boucle de circulation 21.

Le circuit de fluide caloporteur 20 comporte aussi une deuxième boucle de circulation 22 comportant le deuxième radiateur 23 et un élément 24 d'une chaine de traction électrique du véhicule. L'élément 24 peut être par exemple un moteur électrique de traction, ou l'unité électronique de puissance assurant l'alimentation électrique du moteur de traction. L'élément 24 peut aussi être l'ensemble formé par le moteur électrique de traction et l'unité électronique de puissance associée.

La deuxième boucle de circulation 22 comporte une deuxième pompe 26 configurée pour faire circuler le quatrième fluide caloporteur 400 dans la deuxième boucle de circulation 22.

Le circuit de fluide caloporteur 20 comporte une première branche de raccordement 27 reliant fluidiquement la première boucle de circulation 21 et la deuxième boucle de circulation 22. Le circuit de fluide caloporteur 20 comporte une deuxième branche de raccordement 28 reliant fluidiquement la première boucle de circulation 21 et la deuxième boucle de circulation 22.

Plus précisément, la première branche de raccordement 27 relie un point de raccordement 41 situé sur la première boucle de circulation 21 et compris entre la deuxième pompe 26 et le deuxième radiateur 23 à un point de raccordement 42 situé sur la deuxième boucle de circulation 22 et compris entre le premier radiateur 19 et la première pompe 25. La deuxième branche de raccordement 28 relie un point de raccordement 43 situé sur la première boucle de circulation 21 et compris entre le deuxième radiateur 23 et l'élément 24 à un point de raccordement 44 situé sur la deuxième boucle de circulation 22 et compris entre la première pompe 25 et le point de raccordement 42 entre la première boucle de circulation 21 et la première branche de raccordement 27.

Cette configuration permet d'assurer le refroidissement du liquide caloporteur 400 dans l'ensemble des différents modes de fonctionnement.

Ainsi, la chaleur du moteur électrique et/ou de l'électronique de puissance 24 peut être dissipée dans le flux d'air extérieur au niveau du deuxième radiateur 23.

Selon des modes de réalisation non représentés, le circuit de conditionnement thermique selon l'invention peut également comprendre une ou plusieurs des caractéristiques ci-dessous, considérées individuellement ou combinées entre elles :

Le premier fluide caloporteur 100 peut être un flux d'air extérieur à un habitacle du véhicule, le deuxième fluide caloporteur 200 étant alors un liquide caloporteur configuré pour échanger de la chaleur avec une batterie 10 de stockage d'énergie électrique du véhicule, et le troisième fluide caloporteur 300 étant alors un flux d'air intérieur à un habitacle du véhicule.

Le premier échangeur bifluide 15 est optionnel, et peut ne pas être présent. Dans ce cas, la boucle principale comporte un dispositif d'accumulation de fluide réfrigérant 16 sous la forme d'une bouteille déhydratante, avec le deuxième échangeur de chaleur bifluide 17 disposé en aval. Le deuxième échangeur de chaleur bifluide 17 assure donc le sous-refroidissement du fluide réfrigérant.

Le deuxième échangeur de chaleur bifluide 17 est également optionnel, et peut ne pas être présent. Dans ce cas, le premier échangeur bifluide 15 permet de terminer la condensation du fluide réfrigérant. Un dispositif d'accumulation de fluide réfrigérant 16, sous la forme d'une bouteille déhydratante, est disposé en aval du premier échangeur bifluide 15.

## Revendications

1. Procédé de contrôle d'un système de conditionnement thermique (40) pour véhicule automobile comprenant un circuit de fluide réfrigérant (1) configuré pour faire circuler un fluide réfrigérant, le circuit de fluide réfrigérant (1) comportant :
- Une boucle principale (A) comportant successivement selon le sens de parcours du fluide réfrigérant :
un dispositif de compression (2),
un condenseur (3) configuré pour échanger de la chaleur avec un premier fluide caloporteur (100),
un premier dispositif de détente (4),
un premier évaporateur (5) configuré pour échanger de la chaleur avec un deuxième fluide caloporteur (200),
un deuxième dispositif de détente (6),
- Une branche de dérivation (B) reliant un premier point de raccordement (11) disposé sur la boucle principale (A) et compris entre le condenseur (3) et le premier dispositif de détente (4) à un deuxième point de raccordement (12) disposé sur la boucle principale (A) entre le deuxième dispositif de détente (6) et le dispositif de compression (2),
la branche de dérivation (B) comportant successivement selon le sens de parcours du fluide réfrigérant un troisième dispositif de détente (7) et un deuxième évaporateur (8) configuré pour échanger de la chaleur avec un troisième fluide caloporteur (300),
le système de conditionnement thermique étant configuré pour que la température (T1_mes) du deuxième fluide caloporteur (200) en sortie du premier évaporateur (5) atteigne une température de consigne (T1_cons) et pour que la température (T2_mes) du troisième fluide caloporteur (300) en sortie du deuxième évaporateur (8) atteigne une température de consigne (T2_cons),
le procédé de contrôle comportant les étapes :
- Recevoir une requête de priorité donnant priorité soit au refroidissement du deuxième fluide caloporteur (200) soit au refroidissement du troisième fluide caloporteur (300) (étape 50),
- Si la puissance thermique requise pour atteindre simultanément la température de consigne du deuxième fluide caloporteur (200) et du troisième fluide caloporteur (300) est supérieure à la puissance thermique fournie conjointement par le premier évaporateur (5) et le deuxième évaporateur (8), augmenter le régime de rotation du dispositif de compression (2) (étape 51),
le procédé étant **caractérisé en ce qu'**il comprend les étapes suivantes :
- Si le régime de rotation du dispositif de compression (2) a atteint une valeur maximale prédéterminée (N_max) et si la priorité est donnée au refroidissement du troisième fluide caloporteur (300) :
Calculer une température de consigne modifiée (T1_mod) du deuxième fluide caloporteur (200) en sortie du premier évaporateur (5), supérieure à la température de consigne acquise (T1_cons) (étape 52),
Ajuster une section de passage du fluide réfrigérant à travers le deuxième dispositif de détente (6) de façon à ce que la température du deuxième fluide caloporteur (200) atteigne la température de consigne modifiée (T1_mod) (étape 53),
incrémenter la température de consigne modifiée (T1_mod) du deuxième fluide caloporteur (200) jusqu'à ce que la température (T2_mes) du troisième fluide
caloporteur (300) atteigne la température de consigne (T2_cons) (étape 54).

2. Procédé de contrôle selon la revendication 1, dans lequel la température de consigne modifiée (T1_mod) du deuxième fluide caloporteur (200) en sortie du premier évaporateur (5) est calculée par un premier régulateur proportionnel, intégral (PI1) en fonction de la différence entre la température (T2_mes) du troisième fluide caloporteur (300) et la température de consigne (T2_cons) du troisième fluide caloporteur (300).

3. Procédé de contrôle selon la revendication 1 ou 2, dans lequel si la priorité est donnée au refroidissement du troisième fluide caloporteur (300), la section de passage du fluide réfrigérant à travers le deuxième dispositif de détente (6) est contrôlée par un deuxième régulateur proportionnel, intégral (PI2) en fonction de la différence entre la température (T1_mes) du deuxième fluide caloporteur (200) et la température de consigne modifiée (T1_mod) du deuxième fluide caloporteur (200).

4. Procédé de contrôle selon l'une des revendications précédentes, dans lequel si la priorité est donnée au refroidissement du deuxième fluide caloporteur (200), la section de passage du fluide réfrigérant à travers le deuxième dispositif de détente (6) est contrôlée par un deuxième régulateur proportionnel, intégral (PI2) en fonction de la différence entre la température (T1_mes) du deuxième fluide caloporteur (200) et la température de consigne (T1_cons) du deuxième fluide caloporteur (200).

5. Procédé de contrôle selon l'une des revendications précédentes, comportant l' étape :
Diminuer la section de passage du fluide réfrigérant à travers le deuxième dispositif de détente (6) de façon à augmenter la pression du fluide réfrigérant dans le premier évaporateur (5) (étape 57).

6. Procédé de contrôle selon l'une des revendications précédentes, comportant les étapes :
Si le régime de rotation du dispositif de compression (2) a atteint une valeur maximale prédéterminée (N_max) et si la priorité est donnée au refroidissement du deuxième fluide caloporteur (200):
- Calculer une température de consigne modifiée (T2_mod) du troisième fluide caloporteur (300) en sortie du deuxième évaporateur (8), supérieure à la température de consigne acquise (T2_cons),
- Ajuster une section de passage du fluide réfrigérant à travers le troisième dispositif de détente (7) de façon à ce que la température du troisième fluide caloporteur (300) atteigne la température de consigne modifiée (T2_mod), incrémenter la température de consigne modifiée (T2_mod) du troisième fluide caloporteur (300) jusqu'à ce que la température (T1_mes) du deuxième fluide caloporteur (200) atteigne la température de consigne (T1_cons) (étape 59).

7. Procédé de contrôle selon la revendication précédente, dans lequel la température de consigne modifiée (T2_mod) du troisième fluide caloporteur (300) en sortie du deuxième évaporateur (8) est calculée par un troisième régulateur proportionnel, intégral (PI3) en fonction de la différence entre la température (T1_mes) du deuxième fluide caloporteur (200) et la température de consigne (T1_cons) du deuxième fluide caloporteur (200).

8. Procédé de contrôle selon l'une des revendications précédentes, dans lequel si la priorité est donnée au refroidissement du troisième fluide caloporteur (300), la section de passage du fluide réfrigérant à travers le troisième dispositif de détente (7) est contrôlée par un quatrième régulateur proportionnel, intégral (PI4) en fonction de la différence entre la température (T2_mes) du troisième fluide caloporteur (300) et la température de consigne (T2_cons) du troisième fluide caloporteur (300).

9. Procédé de contrôle selon l'une des revendications précédentes en combinaison avec la revendication 6, dans lequel si la priorité est donnée au refroidissement du deuxième fluide caloporteur (200), la section de passage du fluide réfrigérant à travers le troisième dispositif de détente (7) est contrôlée par un quatrième régulateur proportionnel, intégral (PI4) en fonction de la différence entre la température (T2_mes) du troisième fluide caloporteur (300) et la température de consigne modifiée (T2_mod) du troisième fluide caloporteur (300).

10. Procédé de contrôle selon l'une des revendications précédentes, comportant les étapes :
- calculer un cinquième régulateur proportionnel, intégral (PI5) configuré pour réguler le régime de rotation du dispositif de compression (2) en fonction de la différence entre la température (T1_mes) du deuxième fluide caloporteur (200) en sortie du premier évaporateur (5) et la température de consigne (T1_cons) du deuxième fluide caloporteur (200) en sortie du premier évaporateur (5) (étape 62),
- calculer un sixième régulateur proportionnel, intégral (PI6) configuré pour réguler le régime de rotation du dispositif de compression (2) en fonction de la différence entre la température (T2_mes) du troisième fluide caloporteur (300) en sortie du deuxième évaporateur (8) et la température de consigne (T2_cons) du troisième fluide caloporteur (300) en sortie du deuxième évaporateur (8) (étape 63),
- Additionner les paramètres de sortie du cinquième régulateur proportionnel, intégral (PI5) et du sixième régulateur proportionnel, intégral (PI6),
contrôler le régime de rotation du dispositif de compression (2) à partir de la somme des paramètres de sortie du cinquième régulateur proportionnel, intégral (PI5) et du sixième régulateur proportionnel, intégral (PI6) (étape 64).

11. Procédé de contrôle selon l'une des revendications précédentes, dans lequel le système de conditionnement thermique comporte un dispositif d'accumulation (16) de fluide réfrigérant disposé sur la boucle principale entre le condenseur (3) et le premier point de raccordement (11), le procédé de contrôle comportant les étapes :
- Déterminer une surchauffe de consigne (Sur_Cons) du fluide réfrigérant en sortie du premier évaporateur (5),
- Déterminer une température du fluide réfrigérant en sortie du premier évaporateur (5),
- Déterminer une valeur de la surchauffe (Sur_mes) du fluide réfrigérant en sortie du premier évaporateur (5),
- Ajuster une section de passage du fluide réfrigérant à travers le premier dispositif de détente (4) de façon à ce que la valeur de la surchauffe (Sur_mes) du fluide réfrigérant en sortie du premier évaporateur (5) atteigne la surchauffe de consigne (Sur_cons) (étape 65),
dans lequel la section de passage du fluide réfrigérant à travers le premier dispositif de détente (4) est contrôlée par un septième régulateur proportionnel, intégral (PI7) en fonction en fonction de la différence entre la valeur de la surchauffe (Sur_mes) du fluide réfrigérant en sortie du premier évaporateur (5) et la surchauffe de consigne (Sur_cons).

12. Système de conditionnement thermique (40) pour véhicule automobile, comprenant un circuit de fluide réfrigérant (1) configuré pour faire circuler un fluide réfrigérant, le circuit de fluide réfrigérant (1) comportant :
- Une boucle principale (A) comportant successivement selon le sens de parcours du fluide réfrigérant :
un dispositif de compression (2),
un condenseur (3) configuré pour échanger de la chaleur avec un premier fluide caloporteur (100),
un premier dispositif de détente (4),
un premier évaporateur (5) configuré pour échanger de la chaleur avec un deuxième fluide caloporteur (200),
un deuxième dispositif de détente (6),
- Une branche de dérivation (B) reliant un premier point de raccordement (11) disposé sur la boucle principale (A) et compris entre le condenseur (3) et le premier dispositif de détente (4) à un deuxième point de raccordement (12) disposé sur la boucle principale (A) entre le deuxième dispositif de détente (6) et le dispositif de compression (2),
la branche de dérivation (B) comportant successivement selon le sens de parcours du fluide réfrigérant un troisième dispositif de détente (7) et un deuxième évaporateur (8) configuré pour échanger de la chaleur avec un troisième fluide caloporteur (300),
et **caractérisé en ce que** le système de conditionnement thermique (40) comporte
- une unité électronique de contrôle (9) configurée pour mettre en oeuvre le procédé selon l'une des revendications précédentes.

13. Système de conditionnement thermique (40) selon la revendication précédente, comportant :
un circuit de fluide caloporteur (20) configuré pour faire circuler un quatrième fluide caloporteur (400),
un premier échangeur de chaleur bifluide (15) agencé conjointement sur le circuit de fluide réfrigérant (1) et sur le circuit de fluide caloporteur (20) de façon à permettre un échange de chaleur entre le fluide réfrigérant et le quatrième fluide caloporteur (400),
un dispositif d'accumulation (16) de fluide réfrigérant disposé sur la boucle principale (A) entre le condenseur (3) et le premier point de raccordement (11),
le premier échangeur bifluide (15) étant disposé sur la boucle principale de fluide réfrigérant (A) entre le condenseur (3) et le dispositif d'accumulation (16).

14. Système de conditionnement thermique (40) selon la revendication 12 ou 13, comportant un deuxième échangeur de chaleur bifluide (17) agencé conjointement sur le circuit de fluide réfrigérant (1) et sur le circuit de fluide caloporteur (20) de façon à permettre un échange de chaleur entre le fluide réfrigérant et le quatrième fluide caloporteur (400), le deuxième échangeur de chaleur bifluide (17) étant disposé sur la boucle principale (A) entre le dispositif d'accumulation (16) et le premier point de raccordement (11).

15. Système de conditionnement thermique (40) selon l'une des revendications 12 à 14, dans lequel le premier fluide caloporteur (100) est un flux d'air extérieur à un habitacle du véhicule, le deuxième fluide caloporteur (200) est un flux d'air intérieur à un habitacle du véhicule, le troisième fluide caloporteur (300) est un liquide caloporteur configuré pour échanger de la chaleur avec une batterie (10) de stockage d'énergie électrique du véhicule.

## Patentansprüche

1. Verfahren zur Steuerung eines Systems zur thermischen Konditionierung (40) für ein Kraftfahrzeug, umfassend einen Kältemittelkreis (1), der dazu ausgestaltet ist, ein Kältemittel zirkulieren zu lassen, wobei der Kältemittelkreis (1) umfasst:
- Einen Hauptkreislauf (A), der hintereinander in Durchlaufrichtung des Kältemittels umfasst:
eine Kompressionsvorrichtung (2),
einen Kondensator (3), der dazu ausgestaltet ist, Wärme mit einem ersten Wärmeträgerfluid (100) auszutauschen,
eine erste Entspannungsvorrichtung (4),
einen ersten Verdampfer (5), der dazu ausgestaltet ist, Wärme mit einem zweiten Wärmeträgerfluid (200) auszutauschen,
eine zweite Entspannungsvorrichtung (6),
- Einen Bypasszweig (B), der einen ersten Anschlusspunkt (11), der in dem Hauptkreislauf (A) angeordnet ist und zwischen dem Kondensator (3) und der ersten Entspannungsvorrichtung (4) liegt, mit einem zweiten Anschlusspunkt (12) verbindet, der in dem Hauptkreislauf (A) zwischen der zweiten Entspannungsvorrichtung (6) und der Kompressionsvorrichtung (2) angeordnet ist,
wobei der Bypasszweig (B) hintereinander in Durchlaufrichtung des Kältemittels eine dritte Entspannungsvorrichtung (7) umfasst und einen zweiten Verdampfer (8), der dazu ausgestaltet ist, Wärme mit einem dritten Wärmeträgerfluid (300) auszutauschen, wobei das System zur thermischen Konditionierung dazu ausgestaltet ist, dass die Temperatur (T1_mes) des zweiten Wärmeträgerfluids (200) im Ausgang des ersten Verdampfers (5) eine Solltemperatur (T1_cons) erreicht und dass die Temperatur (T2_mes) des dritten Wärmeträgerfluids (300) im Ausgang des zweiten Verdampfers (8) eine Solltemperatur (T2_cons) erreicht, wobei das Verfahren zur Steuerung die Schritte umfasst:
- Empfangen einer Prioritätsanforderung, die entweder der Kühlung des zweiten Wärmeträgerfluids (200) oder der Kühlung des dritten Wärmeträgerfluids (300) Priorität gibt (Schritt 50),
- Wenn die thermische Leistung, die erforderlich ist, um gleichzeitig die Solltemperatur des zweiten Wärmeträgerfluids (200) und des dritten Wärmeträgerfluids (300) zu erreichen, größer als die thermische Leistung ist, die von dem ersten Verdampfer (5) und dem zweiten Verdampfer (8) gemeinsam bereitgestellt wird, Erhöhen der Drehzahl der Kompressionsvorrichtung (2) (Schritt 51), wobei das Verfahren **dadurch gekennzeichnet ist, dass** es die folgenden Schritte umfasst:
- Wenn die Drehzahl der Kompressionsvorrichtung (2) einen vorbestimmten Maximalwert (N_max) erreicht hat und wenn die Priorität der Kühlung des dritten Wärmeträgerfluids (300) gegeben wird:
Berechnen einer geänderten Solltemperatur (T1_mod) des zweiten Wärmeträgerfluids (200) im Ausgang des ersten Verdampfers (5), die über der erfassten Solltemperatur (T1_cons) liegt (Schritt 52),
Anpassen eines Durchtrittsquerschnitts des Kältemittels durch die zweite Entspannungsvorrichtung (6) hindurch, so dass die Temperatur des zweiten Wärmeträgerfluids (200) die geänderte Solltemperatur (T1_mod) erreicht (Schritt 53),
Inkrementieren der geänderten Solltemperatur (T1_mod) des zweiten Wärmeträgerfluids (200), bis die Temperatur (T2_mes) des dritten Wärmeträgerfluids (300) die Solltemperatur (T2_cons) erreicht (Schritt 54).

2. Verfahren zur Steuerung nach Anspruch 1, bei dem die geänderte Solltemperatur (T1_mod) des zweiten Wärmeträgerfluids (200) im Ausgang des ersten Verdampfers (5) von einem ersten Proportional-Integral-Regler (PI1) in Abhängigkeit von der Differenz zwischen der Temperatur (T2_mes) des dritten Wärmeträgerfluids (300) und der Solltemperatur (T2_cons) des dritten Wärmeträgerfluids (300) berechnet wird.

3. Verfahren zur Steuerung nach Anspruch 1 oder 2, bei dem, wenn die Priorität der Kühlung des dritten Wärmeträgerfluids (300) gegeben wird, der Durchtrittsquerschnitt des Kältemittels durch die zweite Entspannungsvorrichtung (6) hindurch von einem zweiten Proportional-Integral-Regler (PI2) in Abhängigkeit von der Differenz zwischen der Temperatur (T1_mes) des zweiten Wärmeträgerfluids (200) und der geänderten Solltemperatur (T1_mod) des zweiten Wärmeträgerfluids (200) gesteuert wird.

4. Verfahren zur Steuerung nach einem der vorhergehenden Ansprüche, bei dem, wenn die Priorität der Kühlung des zweiten Wärmeträgerfluids (200) gegeben wird, der Durchtrittsquerschnitt des Kältemittels durch die zweite Entspannungsvorrichtung (6) hindurch von einem zweiten Proportional-Integral-Regler (PI2) in Abhängigkeit von der Differenz zwischen der Temperatur (T1_mes) des zweiten Wärmeträgerfluids (200) und der Solltemperatur (T1_cons) des zweiten Wärmeträgerfluids (200) gesteuert wird.

5. Verfahren zur Steuerung nach einem der vorhergehenden Ansprüche, umfassend den Schritt: Verringern des Durchtrittsquerschnitts des Kältemittels durch die zweite Entspannungsvorrichtung (6) hindurch, so dass der Druck des Kältemittels in dem ersten Verdampfer (5) erhöht wird (Schritt 57).

6. Verfahren zur Steuerung nach einem der vorhergehenden Ansprüche, umfassend die Schritte:
Wenn die Drehzahl der Kompressionsvorrichtung (2) einen vorbestimmten Maximalwert (N_max) erreicht hat und wenn die Priorität der Kühlung des zweiten Wärmeträgerfluids (200) gegeben wird:
- Berechnen einer geänderten Solltemperatur (T2_mod) des dritten Wärmeträgerfluids (300) im Ausgang des zweiten Verdampfers (8), die über der erfassten Solltemperatur (T2_cons) liegt,
- Anpassen eines Durchtrittsquerschnitts des Kältemittels durch die dritte Entspannungsvorrichtung (7) hindurch, so dass die Temperatur des dritten Wärmeträgerfluids (300) die geänderte Solltemperatur (T2_mod) erreicht, Inkrementieren der geänderten Solltemperatur (T2_mod) des dritten Wärmeträgerfluids (300), bis die Temperatur (T1_mes) des zweiten Wärmeträgerfluids (200) die Solltemperatur (T1_cons) erreicht (Schritt 59).

7. Verfahren zur Steuerung nach dem vorhergehenden Anspruch, bei dem die geänderte Solltemperatur (T2_mod) des dritten Wärmeträgerfluids (300) im Ausgang des zweiten Verdampfers (8) von einem dritten Proportional-Integral-Regler (PI3) in Abhängigkeit von der Differenz zwischen der Temperatur (T1_mes) des zweiten Wärmeträgerfluids (200) und der Solltemperatur (T1_cons) des zweiten Wärmeträgerfluids (200) berechnet wird.

8. Verfahren zur Steuerung nach einem der vorhergehenden Ansprüche, bei dem, wenn die Priorität der Kühlung des dritten Wärmeträgerfluids (300) gegeben wird, der Durchtrittsquerschnitt des Kältemittels durch die dritte Entspannungsvorrichtung (7) hindurch von einem vierten Proportional-Integral-Regler (PI4) in Abhängigkeit von der Differenz zwischen der Temperatur (T2_mes) des dritten Wärmeträgerfluids (300) und der Solltemperatur (T2_cons) des dritten Wärmeträgerfluids (300) gesteuert wird.

9. Verfahren zur Steuerung nach einem der vorhergehenden Ansprüche in Verbindung mit Anspruch 6, bei dem, wenn die Priorität der Kühlung des zweiten Wärmeträgerfluids (200) gegeben wird, der Durchtrittsquerschnitt des Kältemittels durch die dritte Entspannungsvorrichtung (7) hindurch von einem vierten Proportional-Integral-Regler (PI4) in Abhängigkeit von der Differenz zwischen der Temperatur (T2_mes) des dritten Wärmeträgerfluids (300) und der geänderten Solltemperatur (T2_mod) des dritten Wärmeträgerfluids (300) gesteuert wird.

10. Verfahren zur Steuerung nach einem der vorhergehenden Ansprüche, umfassend die Schritte:
- Berechnen eines fünften Proportional-Integral-Reglers (PI5), der dazu ausgestaltet ist, die Drehzahl der Kompressionsvorrichtung (2) in Abhängigkeit von der Differenz zwischen der Temperatur (T1_mes) des zweiten Wärmeträgerfluids (200) im Ausgang des ersten Verdampfers (5) und der Solltemperatur (T1_cons) des zweiten Wärmeträgerfluids (200) im Ausgang des ersten Verdampfers (5) zu regeln (Schritt 62),
- Berechnen eines sechsten Proportional-Integral-Reglers (PI6), der dazu ausgestaltet ist, die Drehzahl der Kompressionsvorrichtung (2) in Abhängigkeit von der Differenz zwischen der Temperatur (T2_mes) des dritten Wärmeträgerfluids (300) im Ausgang des zweiten Verdampfers (8) und der Solltemperatur (T2_cons) des zweiten Wärmeträgerfluids (300) im Ausgang des zweiten Verdampfers (8) zu regeln (Schritt 63),
- Addieren der Ausgangsparameter des fünften Proportional-Integral-Reglers (PI5) und des sechsten Proportional-Integral-Reglers (PI6), Steuern der Drehzahl der Kompressionsvorrichtung (2) ausgehend von der Summe der Ausgangsparameter des fünften Proportional-Integral-Reglers (PI5) und des sechsten Proportional-Integral-Reglers (PI6) (Schritt 64).

11. Verfahren zur Steuerung nach einem der vorhergehenden Ansprüche, bei dem das System zur thermischen Konditionierung eine Kältemittel-Speichervorrichtung (16) umfasst, die in dem Hauptkreislauf zwischen dem Kondensator (3) und dem ersten Anschlusspunkt (11) angeordnet ist, wobei das Verfahren zur Steuerung die Schritte umfasst:
- Bestimmen einer Sollüberhitzung (Sur_Cons) des Kältemittels im Ausgang des ersten Verdampfers (5),
- Bestimmen einer Temperatur des Kältemittels im Ausgang des ersten Verdampfers (5),
- Bestimmen eines Werts der Überhitzung (Sur_mes) des Kältemittels im Ausgang des ersten Verdampfers (5),
- Anpassen eines Durchtrittsquerschnitts des Kältemittels durch die erste Entspannungsvorrichtung (4) hindurch, so dass der Wert der Überhitzung (Sur_mes) des Kältemittels im Ausgang des ersten Verdampfers (5) die Sollüberhitzung (Sur_cons) erreicht (Schritt 65),
wobei der Durchtrittsquerschnitt des Kältemittels durch die erste Entspannungsvorrichtung (4) hindurch von einem siebten Proportional-Integral-Regler (PI7) in Abhängigkeit von der Differenz zwischen dem Wert der Überhitzung (Sur_mes) des Kältemittels im Ausgang des ersten Verdampfers (5) und der Sollüberhitzung (Sur_cons) gesteuert wird.

12. System zur thermischen Konditionierung (40) für ein Kraftfahrzeug, umfassend einen Kältemittelkreis (1), der dazu ausgestaltet ist, ein Kältemittel zirkulieren zu lassen, wobei der Kältemittelkreis (1) umfasst:
- Einen Hauptkreislauf (A), der hintereinander in Durchlaufrichtung des Kältemittels umfasst:
eine Kompressionsvorrichtung (2),
einen Kondensator (3), der dazu ausgestaltet ist, Wärme mit einem ersten Wärmeträgerfluid (100) auszutauschen, eine erste Entspannungsvorrichtung (4),
einen ersten Verdampfer (5), der dazu ausgestaltet ist, Wärme mit einem zweiten Wärmeträgerfluid (200) auszutauschen,
eine zweite Entspannungsvorrichtung (6),
- Einen Bypasszweig (B), der einen ersten Anschlusspunkt (11), der in dem Hauptkreislauf (A) angeordnet ist und zwischen dem Kondensator (3) und der ersten Entspannungsvorrichtung (4) liegt, mit einem zweiten Anschlusspunkt (12) verbindet, der in dem Hauptkreislauf (A) zwischen der zweiten Entspannungsvorrichtung (6) und der Kompressionsvorrichtung (2) angeordnet ist,
wobei der Bypasszweig (B) hintereinander in Durchlaufrichtung des Kältemittels eine dritte Entspannungsvorrichtung (7) umfasst und einen zweiten Verdampfer (8), der dazu ausgestaltet ist, Wärme mit einem dritten Wärmeträgerfluid (300) auszutauschen, und **dadurch gekennzeichnet, dass** das System zur thermischen Konditionierung (40) umfasst
- eine elektronische Steuerungseinheit (9), die dazu ausgestaltet ist, das Verfahren nach einem der vorhergehenden Ansprüche auszuführen.

13. System zur thermischen Konditionierung (40) nach dem vorhergehenden Anspruch, umfassend:
einen Wärmeträgerfluidkreis (20), der dazu ausgestaltet ist, ein viertes Wärmeträgerfluid (400) zirkulieren zu lassen,
einen ersten Doppelfluid-Wärmetauscher (15), der sowohl in dem Kältemittelkreis (1) als auch in dem Wärmeträgerfluidkreis (20) eingerichtet ist, so dass er einen Wärmeaustausch zwischen dem Kältemittel und dem vierten Wärmeträgerfluid (400) ermöglicht,
eine Kältemittel-Speichervorrichtung (16), die in dem Hauptkreislauf (A) zwischen dem Kondensator (3) und dem ersten Anschlusspunkt (11) angeordnet ist, wobei der Doppelfluid-Wärmetauscher (15) in dem Kältemittel-Hauptkreislauf (A) zwischen dem Kondensator (3) und der Speichervorrichtung (16) angeordnet ist.

14. System zur thermischen Konditionierung (40) nach Anspruch 12 oder 13, umfassend einen zweiten Doppelfluid-Wärmetauscher (17), der sowohl in dem Kältemittelkreis (1) als auch in dem Wärmeträgerfluidkreis (20) eingerichtet ist, so dass er einen Wärmeaustausch zwischen dem Kältemittel und dem vierten Wärmeträgerfluid (400) ermöglicht, wobei der zweite Doppelfluid-Wärmetauscher (17) in dem Hauptkreislauf (A) zwischen der Speichervorrichtung (16) und dem ersten Anschlusspunkt (11) angeordnet ist.

15. System zur thermischen Konditionierung (40) nach einem der Ansprüche 12 bis 14, bei dem das erste Wärmeträgerfluid (100) ein Luftstrom außerhalb eines Fahrgastraums des Fahrzeugs ist, das zweite Wärmeträgerfluid (200) ein Luftstrom innerhalb eines Fahrgastraums des Fahrzeugs ist, das dritte Wärmeträgerfluid (300) eine Wärmeträgerflüssigkeit ist, die dazu ausgestaltet ist, Wärme mit einer Batterie (10) zur Speicherung von elektrischer Energie des Fahrzeugs auszutauschen.

## Claims

1. Method for controlling a thermal conditioning system (40) for a motor vehicle comprising a refrigerant circuit (1) configured to circulate a refrigerant, the refrigerant circuit (1) comprising:
- A main loop (A) comprising successively, in the direction of flow of the refrigerant:
a compression device (2),
a condenser (3) configured to exchange heat with a first heat transfer fluid (100),
a first expansion device (4),
a first evaporator (5) configured to exchange heat with a second heat transfer fluid (200),
a second expansion device (6),
- A bypass branch (B) connecting a first connection point (11) positioned on the main loop (A) between the condenser (3) and the first expansion device (4) to a second connection point (12) positioned on the main loop (A) between the second expansion device (6) and the compression device (2),
the bypass branch (B) comprising successively, in the direction of flow of the refrigerant, a third expansion device (7) and a second evaporator (8) configured to exchange heat with a third heat transfer fluid (300), the thermal conditioning system being configured so that the temperature (T1_mes) of the second heat transfer fluid (200) at the outlet of the first evaporator (5) reaches a temperature setpoint (T1_cons) and so that the temperature (T2_mes) of the third heat transfer fluid (300) at the outlet of the second evaporator (8) reaches a temperature setpoint (T2_cons), the control method comprising the following steps:
- Receiving a priority request giving priority either to cooling the second heat transfer fluid (200) or to cooling the third heat transfer fluid (300) (step 50),
- If the thermal power required in order to simultaneously reach the temperature setpoint of the second heat transfer fluid (200) and of the third heat transfer fluid (300) is greater than the thermal power supplied jointly by the first evaporator (5) and the second evaporator (8), increasing the rotation speed of the compression device (2) (step 51), the method being **characterized in that** it comprises the following steps:
- If the rotation speed of the compression device (2) has reached a predetermined maximum value (N_max) and if priority is given to cooling the third heat transfer fluid (300):
Calculating a modified temperature setpoint (T1_mod) of the second heat transfer fluid (200) at the outlet of the first evaporator (5), greater than the acquired temperature setpoint (T1_cons) (step 52),
Adjusting a refrigerant flow area through the second expansion device (6) so that the temperature of the second heat transfer fluid (200) reaches the modified temperature setpoint (T1_mod) (step 53),
increasing the modified temperature setpoint (T1_mod) of the second heat transfer fluid (200) until the temperature (T2_mes) of the third heat transfer fluid (300) reaches the temperature setpoint (T2_cons) (step 54) .

2. Control method according to Claim 1, in which the modified temperature setpoint (T1_mod) of the second heat transfer fluid (200) at the outlet of the first evaporator (5) is calculated by a first proportional-integral controller (PI1) as a function of the difference between the temperature (T2_mes) of the third heat transfer fluid (300) and the temperature setpoint (T2_cons) of the third heat transfer fluid (300).

3. Control method according to Claim 1 or 2, in which if priority is given to cooling the third heat transfer fluid (300), the refrigerant flow area through the second expansion device (6) is controlled by a second proportional-integral controller (PI2) as a function of the difference between the temperature (T1_mes) of the second heat transfer fluid (200) and the modified temperature setpoint (T1_mod) of the second heat transfer fluid (200).

4. Control method according to one of the preceding claims, in which if priority is given to cooling the second heat transfer fluid (200), the refrigerant flow area through the second expansion device (6) is controlled by a second proportional-integral controller (PI2) as a function of the difference between the temperature (T1_mes) of the second heat transfer fluid (200) and the temperature setpoint (T1_cons) of the second heat transfer fluid (200).

5. Control method according to one of the preceding claims, comprising the step:
Reducing the refrigerant flow area through the second expansion device (6) so as to increase the refrigerant pressure in the first evaporator (5) (step 57).

6. Control method according to one of the preceding claims, comprising the steps:
If the rotation speed of the compression device (2) has reached a predetermined maximum value (N_max) and if priority is given to cooling the second heat transfer fluid (200):
- Calculating a modified temperature setpoint (T2_mod) of the third heat transfer fluid (300) at the outlet of the second evaporator (8), greater than the acquired temperature setpoint (T2_cons),
- Adjusting a refrigerant flow area through the third expansion device (7) so that the temperature of the third heat transfer fluid (300) reaches the modified temperature setpoint (T2_mod),
increasing the modified temperature setpoint (T2_mod) of the third heat transfer fluid (300) until the temperature (T1_mes) of the second heat transfer fluid (200) reaches the temperature setpoint (T1_cons) (step 59).

7. Control method according to the preceding claim, in which the modified temperature setpoint (T2_mod) of the third heat transfer fluid (300) at the outlet of the second evaporator (8) is calculated by a third proportional-integral controller (PI3) as a function of the difference between the temperature (T1_mes) of the second heat transfer fluid (200) and the temperature setpoint (T1_cons) of the second heat transfer fluid (200) .

8. Control method according to one of the preceding claims, in which if priority is given to cooling the third heat transfer fluid (300), the refrigerant flow area through the third expansion device (7) is controlled by a fourth proportional-integral controller (PI4) as a function of the difference between the temperature (T2_mes) of the third heat transfer fluid (300) and the temperature setpoint (T2_cons) of the third heat transfer fluid (300).

9. Control method according to one of the preceding claims in combination with Claim 6, in which if priority is given to cooling the second heat transfer fluid (200), the refrigerant flow area through the third expansion device (7) is controlled by a fourth proportional-integral controller (PI4) as a function of the difference between the temperature (T2_mes) of the third heat transfer fluid (300) and the modified temperature setpoint (T2_mod) of the third heat transfer fluid (300).

10. Control method according to one of the preceding claims, comprising the steps:
- tuning a fifth proportional-integral controller (PI5) configured to regulate the rotation speed of the compression device (2) as a function of the difference between the temperature (T1_mes) of the second heat transfer fluid (200) at the outlet of the first evaporator (5) and the temperature setpoint (T1_cons) of the second heat transfer fluid (200) at the outlet of the first evaporator (5) (step 62),
- tuning a sixth proportional-integral controller (PI6) configured to regulate the rotation speed of the compression device (2) as a function of the difference between the temperature (T2_mes) of the third heat transfer fluid (300) at the outlet of the second evaporator (8) and the temperature setpoint (T2_cons) of the third heat transfer fluid (300) at the outlet of the second evaporator (8) (step 63),
- Adding together the output parameters of the fifth proportional-integral controller (PI5) and the sixth proportional-integral controller (PI6),
controlling the rotation speed of the compression device (2) on the basis of the sum of the output parameters of the fifth proportional-integral controller (PI5) and the sixth proportional-integral controller (PI6) (step 64).

11. Control method according to one of the preceding claims, in which the thermal conditioning system comprises a refrigerant accumulation device (16) positioned on the main loop between the condenser (3) and the first connection point (11), the control method comprising the steps:
- Determining a refrigerant superheating setpoint (Sur_Cons) at the outlet of the first evaporator (5),
- Determining a refrigerant temperature at the outlet of the first evaporator (5),
- Determining a refrigerant superheating value (Sur_mes) at the outlet of the first evaporator (5),
- Adjusting a refrigerant flow area through the first expansion device (4) so that the refrigerant superheating value (Sur_mes) at the outlet of the first evaporator (5) reaches the superheating setpoint (Sur_cons) (step 65), in which the refrigerant flow area through the first expansion device (4) is controlled by a seventh proportional-integral controller (PI7) as a function of the difference between the refrigerant superheating value (Sur_mes) at the outlet of the first evaporator (5) and the superheating setpoint (Sur_cons).

12. Thermal conditioning system (40) for a motor vehicle, comprising a refrigerant circuit (1) configured to circulate a refrigerant, the refrigerant circuit (1) comprising:
- A main loop (A) comprising successively, in the direction of flow of the refrigerant:
a compression device (2),
a condenser (3) configured to exchange heat with a first heat transfer fluid (100),
a first expansion device (4),
a first evaporator (5) configured to exchange heat with a second heat transfer fluid (200),
a second expansion device (6),
- A bypass branch (B) connecting a first connection point (11) positioned on the main loop (A) between the condenser (3) and the first expansion device (4) to a second connection point (12) positioned on the main loop (A) between the second expansion device (6) and the compression device (2),
the bypass branch (B) comprising successively, in the direction of flow of the refrigerant, a third expansion device (7) and a second evaporator (8) configured to exchange heat with a third heat transfer fluid (300), and **characterized in that** the thermal conditioning system (40) comprises
- an electronic control unit (9) configured to implement the method according to one of the preceding claims.

13. Thermal conditioning system (40) according to the preceding claim, comprising:
a heat transfer fluid circuit (20) configured to circulate a fourth heat transfer fluid (400),
a first two-fluid heat exchanger (15) arranged jointly on the refrigerant circuit (1) and on the heat transfer fluid circuit (20) so as to allow heat exchange between the refrigerant and the fourth heat transfer fluid (400),
a refrigerant accumulation device (16) positioned on the main loop (A) between the condenser (3) and the first connection point (11), the first two-fluid exchanger (15) being positioned on the main refrigerant loop (A) between the condenser (3) and the accumulation device (16).

14. Thermal conditioning system (40) according to Claim 12 or 13, comprising a second two-fluid heat exchanger (17) arranged jointly on the refrigerant circuit (1) and on the heat transfer fluid circuit (20) so as to allow heat exchange between the refrigerant and the fourth heat transfer fluid (400), the second two-fluid heat exchanger (17) being positioned on the main loop (A) between the accumulation device (16) and the first connection point (11) .

15. Thermal conditioning system (40) according to one of Claims 12 to 14, in which the first heat transfer fluid (100) is an air flow outside a passenger compartment of the vehicle, the second heat transfer fluid (200) is an air flow inside a passenger compartment of the vehicle, and the third heat transfer fluid (300) is a heat transfer liquid configured to exchange heat with an electrical energy storage battery (10) of the vehicle.
